# EUROPEAN PATENT APPLICATION

(11) **EP 2 551 238 A1**
(43) Date of publication of application: **30.01.2013**
(21) Application number: 11758770.9
(22) Date of filing: 14.03.2011
(51) Int. Cl.: C01B 33/037

(54) **METHOD FOR PURIFYING SILICON**

(30) Priority: 24.03.2010 CN 201010132284
(71) Applicant: Intiraymi Silicon Technologies Ltd, Beijing 100190 (CN)
(72) Inventor: JIANG, Xuezhao, Beijing 100190 (CN)
(74) Representative: Grünecker, Kinkeldey, Stockmair & Schwanhäusser
(86) International application number: PCT/CN2011/071772
(87) International publication number: WO 2011/116660

(57) **Abstract**

Disclosed is a method for purifying silicon, which comprises the steps as follows: molten Na₂CO₃ is added into molten silicon to be purified in an amount of 10% by weight of silicon to be purified, and after stirring for 10 minutes, a covering agent is placed on the surface of the mixture melt, which is then sealed; the temperature of silicon to be purified is monitored and recorded therefrom; the cooling rate is decreased when the temperature is lowered to 1490-1510°C; the heating power is kept constant when the temperature is lowered to the melting point of silicon; heating is stopped when silicon begins to cool down; silicon in the solid state is removed after cooling down to the room temperature naturally; after the silicon being crushed at room temperature, a mixed acid solution is added and then is subjected to standing for 12 hours in a fume hood; silicon grains fragmented by leaching are separated from the acid solution and then are soaked upon adding water thereto, which are rinsed with water to neutrality and filtered and dried to give silicon product with high purity. As compared with traditional directional solidification and zone melting, the segregating efficiency of impurities in the solidification is improved substantially, the purification process is shortened greatly, and the actual yield of the pure material is increased.

## Description

### Technical Field

The present invention refers to a method for manufacturing high-purity silicon. The manufactured silicon is used for solar cells.

### Background Art

Photovoltaic power generation is a technology converting light power directly into electrical power by using the photovoltaic effect of semiconductor interfaces. The key components of this technology are solar cells, and one of the key factors of manufacturing solar cells is the preparation of high purity silicon.

In order to lower the cost of the photovoltaic power generation and promote the transformation of the photovoltaic power generation into a principal energy, it is a strategic measure to avoid the modified Siemens process in the prior art which is high-cost, high-energy-consumption and environmental burden, and to seek new purification methods for manufacturing high purity silicon used in solar cells which are low-cost, low-energy-consumption and environment-friendly.

Generally, the metallurgy method (physical method) which has achieved initial success is a combination of two types of purification processes. The first type, the basic processes included in the physic method, are the directional solidification and the zone-melting which are able to remove the majority of impurities from silicon and enhance the overall purity of silicon. The second type is a purification process specially for removing electrically active impurities in silicon such as boron and phosphor which are difficult to be removed by the first type. The combination of these two types has produced high purity silicon which can be used in the preparation of solar cells. The actual result shows however that the prepared solar cells have the defects: the photoelectric conversion efficiency is insufficient and deteriorates rapidly. This indicates that the content of impurities in the high purity silicon prepared by the prior art methods is still unstable and the purity of silicon needs to be further improved. Therefore, the metallurgy method in prior art is still unable to meet the requirement of solar cells.

The principle of employing the directional solidification and the zone-melting for purification and impurity removal is based on the segregation effect of impurities while silicon being in the state of solid-liquid double-phase equilibrium. The said segregation effect means that the concentrations of impurities in solid state and liquid state are different. C_{Solid} represents the concentration of impurities in solid state of silicon, C_{Liquid} represents the concentration of impurities in liquid state, and K indicates the segregation effect of impurities. Thus, K=C_{Solid} /C_{Liquid}. This formula is determined by the thermodynamic characteristics when impurities and silicon are of solid-liquid double-phase equilibrium and represents a physical phenomenon ubiquitous in nature.

The directional solidification and the zone-melting , with the help of the segregation effect of impurities, make silicon to be purified into ingots, and further make the ingots (whole ingot or one portion) melt, and control the solid-liquid interface to shift from the head of the ingot to the foot of it. As the K value of the overwhelming majority of impurities in silicon is less than 1 and the concentration of impurities in solid state is far below that in liquid state, impurities in silicon are redistributed during the process of solid-liquid interface shifting from head to foot. The impurities discharged continuously from the solidified solid phase to the liquid phase are brought to the part that solidifies later, until they arrive at the foot part by the liquid-phase silicon that has not solidified yet. Finally, the purified high purity silicon is obtained by cutting off the impurity-enriched foot part. As one of the basic methods for purification, the directional solidification and zone-melting have also been used widely for the purification of more materials besides silicon

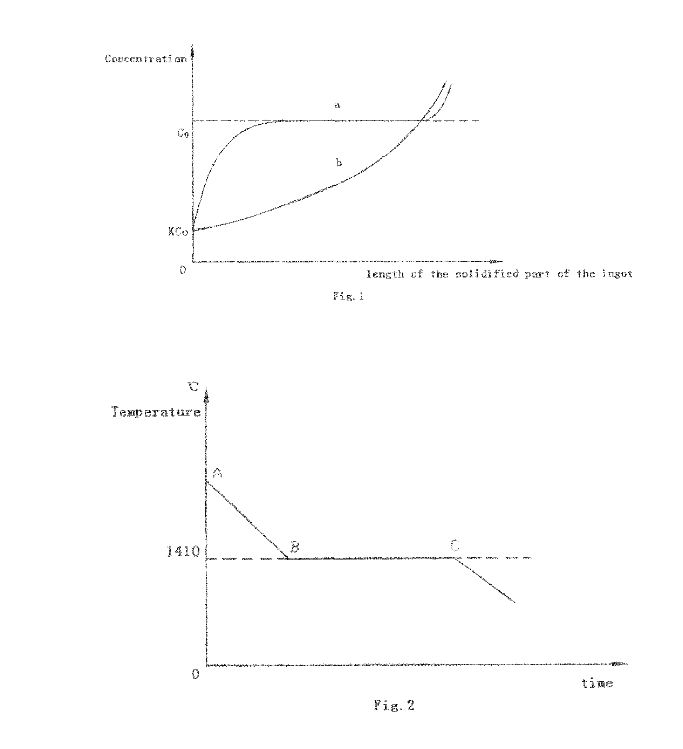

The distribution of impurities along the length of an ingot after the directional solidification is illustrated in fig.1. Regarding the impurities wherein K<1, with the shift of solid-liquid interface from the head to foot of an ingot, the impurities discharged from the solid phase accumulate on the solid-liquid interface. Consequently, the concentration on the liquid-phase side of the interface increases, which also results in the increase of the concentration of impurities in the solid phase at the time of crystallization. In fig.1, curve a indicates the result of impurities accumulated on the solid-liquid interface shifting to melting silicon because of concentration diffusion. Curve *b* indicates a limit state (ideal state) where the impurities discharged from the solid phase spread swiftly to the liquid phase, which makes the concentration of impurities reach a uniform state. By taking measures to slow down the moving speed of the interface and accelerate the spreading speed of impurities, the distribution of impurities along the length of an ingot after solidification is between the two curves *a* and *b*.

In the directional solidification and zone-melting, the solid-liquid interface which has an effect on the segregation of impurity is always equal to the cross-sectional area of an ingot. In that case, slowing down the moving speed of the interface is the only way to enhance the result of the segregation effect. It can be known from fig.1 that the concentration of impurity decreases below the original concentration C₀ and the length of ingot is less than half of the entire ingot after one operation of directional solidification.

It is discovered after the analysis of the purification process of the directional solidification and the zone-melting that in the process of carrying out the impurity removal and purification by using the segregation of impurity, there exist serious shortcoming defects such as being low effect, time consuming, energy consuming and material consuming. It is inappropriate to apply this conventional segregation method to the purification of the industrial silicon as crude metal with high impurity content.

### Summary of the invention

The main object of the present invention is to provide a new method for the purification of silicon, which, in comparison with the directional solidification and zone-melting, can improve the efficiency of purification remarkably and enhance the purity of the industrial silicon high enough to meet the requirements of solar cells.

The present invention employs the following technical solutions in order to achieve the said object.

A method for the purification of silicon, comprises the steps of:
(1) adding melting Na₂CO₃ which accounts for 10% by weight into the melting silicon to be purified, and then adding covering agent to the surface of the melt blend after stirring for 10 minutes;
(2) starting to monitor and record the temperature of the silicon to be purified;
(3) reducing the cooling speed when the temperature is lowered to 1490~1510°C (namely, 80 ~ 100°C higher than the melting point of silicon) ;
(4) Keeping the heating power constant when the temperature reduces to the melting point of silicon;
(5) stopping heating when silicon starts to cool down;
(6) cooling silicon naturally down to room temperature and taking out the crystallized solid silicon;
(7) At room temperature, crushing the crystallized silicon and soaking them in the mixed acid solution, subject to standing in a fume hood for 12 hours; and
(8) separating the silicon grains fragmented by leaching from the acid solution, adding water for soaking, rinsing with water till neutral, filtering, drying, and high-purity silicon is obtained.

The above mentioned method for the purification of silicon, characterized in that: the said covering agent is wheat straw or rice straw and should be added in an amount to entirely cover the surface of the silicon to be purified.

The said method for the purification of silicon, wherein, the said mixed acid solution is one of HCL of 19% by weight, HNO₃ of 49% by weight or H₂SO₄ of 49% by weight, or any two or more than two of them with equal weight.

The method for the purification of silicon using grain-boundary doping effect, characterized in that the melting silicon to be purified is placed in the temperature-controllable crystallizer, the number of silicon crystal nucleus and the growing speed of the grains at the time of solidification is adjusted, the segregation effect of impurities on the surface of grains and the interface of melts is used to make the impurities discharged from the grains to accumulate on the grain boundary, and then the purified silicon is obtained by setting free the grains of silicon wrapped by impurities.

The said adjustment of the number of silicon crystal nucleus at the time of solidification refers to forming at the same time a large number of crystal nucleus instantly, enlarging solid-liquid interface.

The said setting free the grains of silicon wrapped by impurities refers to that the high-purity grains wrapped by impurities are set free when the impurities on the grain boundary is soaked and dissolved by the acid solution.

The impurities concentrating on the grain boundary separate out from the grain boundary during the cooling process and form into isolated impurity phase.

The said temperature-controllable crystallizer comprises the outer temperature-controlling panel and the crystallizer placed inside. The said temperature-controlling panel controls the temperature of silicon melt during the process of crystallization by the built-in heating device. The said crystallizer contains inside the temperature-controlling thermocouple connected with program temperature controller.

The favorable effects of the present invention are as follows:

The present invention provides a brand-new method of purification using the segregation effect of impurities, hereinafter referred to as grain boundary doping method. The steps included are: adding the melting industrial silicon specially-made and temperature controllable crystallizer; adjusting the number of silicon crystal nucleus at the time of solidification and the growing speed of the grains by macro means in order to make full use of the segregation effect of impurities on the surface of grains and the interface of melts; the impurities discharged from the grains concentrate on the grain boundary that finally solidify.

Then the silicon with a higher purity is obtained by setting free the grains of pure silicon wrapped by impurities by effective means.

Compared with the conventional directional solidification and zone-melting, the present invention is superior in the following aspects:
1. The segregation efficiency of impurities in the solidification process has been greatly enhanced, which accordingly increases the efficiency and effect of purification. According to the purification method of the present invention, a large number of crystal nucleuses are instantly formed at the same time, which produces big solid-liquid interface. With the growth of crystal nucleuses of silicon, the growth of the area of the solid-liquid interface is proportional to the second power of the radius of grains, and therefore there will be obvious change in the effect of segregation and purification.
2. The process of purification is greatly shortened. It can be known by comparing the crystallization process of 10kg of industrial silicon using grain boundary doping and the process of the directional solidification using 10kg of silicon that: the average size of grains of the industrial silicon is 1 millimeter after solidification in the crystallizer. Supposing that it takes 30 minutes from the start of crystallization to the entire solidification, then the growth speed of grains (the advancing speed of the solid-liquid interface) is 1 millimeter/hour. Accordingly, it takes 530 hours (22 days) for 10kg of silicon casted into a billet with a section of 9cmX9cm and a length of 53cm to finish the directional solidification at this speed. However, according to the grain boundary doping method, a large number of crystal nucleuses starts at the same time, each grain meets the other one only after it extends by 1 millimeter towards the space around, and impurities are removed to the grain boundary. This takes only 30 minutes.
3. The actual yield of pure materials is increased. A large number of grains grow simultaneously in three-dimensional space and integrate in the end. Due to the highly efficient segregation effect, the impurities from silicon concentrate on the grain boundary that finally solidifies. The impurities concentrating on the grain boundary separate out from the grain boundary during the cooling process and form into isolated impurity phase. The high-purity silicon grains wrapped by impurities are set free when the impurities on the grain boundary are soaked and dissolved using acid solutions. The purified silicon collected thereby suffers a small loss and the actual yield is greatly enhanced compared with the directional solidification that needs to cut off the tail part of impurity repeatedly.

The grain boundary doping method shares the same theory as the directional solidification and zone-melting in terms of the removal of impurities, nevertheless, the segregation effect is particularly remarkable. The purity quality of silicon after purification will be effectively increased. Moreover, after further treatment of removing boron and phosphorus, the requirements from solar cells for high-purity silicon can be well met.

### Brief Description of the Drawings

Fig.1 is a curve containing the concentration of impurities and solidification part during the process of the directional solidification.
Fig.2 is a stepped cooling curve of the industrial silicon during the cooling process.
Fig.3 is the external front view of the temperature-controllable crystallizer used in the method of purification of the present invention.
Fig.4 is the external left view of the temperature-controllable crystallizer used in the method of purification of the present invention.
Fig.5 is the external right view of the temperature-controllable crystallizer used in the method of purification of the present invention.
Fig.6 is the A-A section view of fig.4.
Fig.7 is the B-B section view of fig.3.

### Detailed description of the preferred embodiments

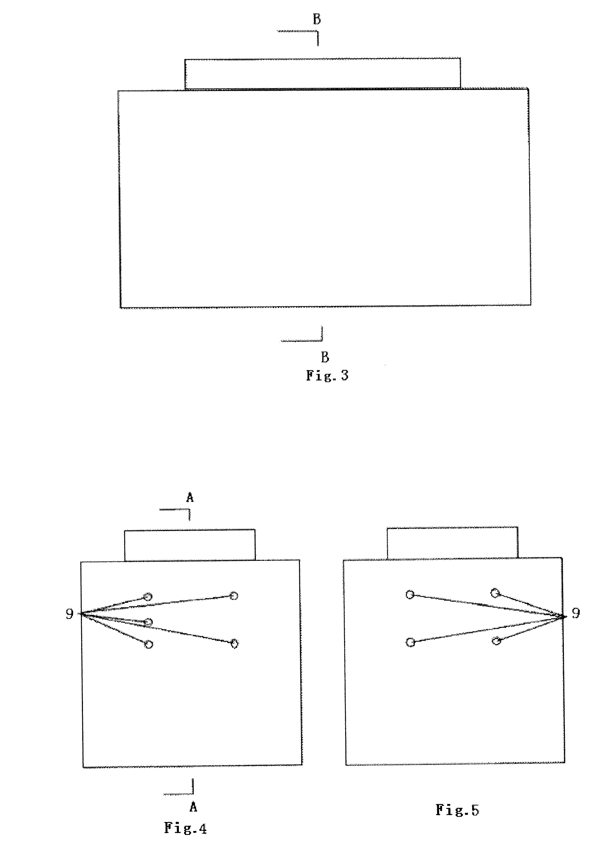

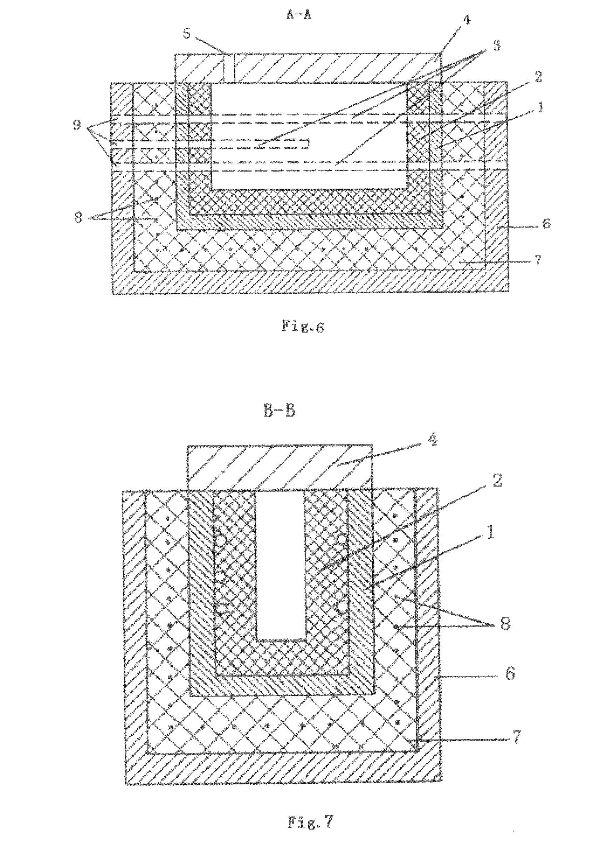

The exterior and structure of the typical temperature-controllable crystallizer for conducting the grain boundary doping method of the present invention is illustrated in fig.3-fig.7.

The said temperature-controllable crystallizer comprises the outer temperature-controlling panel and the crystallizer inside the said panel. The said crystallizer has a double-layer structure including case 1 made from the heat-resisting metal and lining 2 made from flame-resisting material. Five high-heat resistant alloy tubes 3 are welded to the inner layer of the case 1, two of them on one side and the other three on the other side. Among three alloy tubes on the same side, the length of the alloy tube in the middle is half of the other 4 alloy tubes. This alloy tube forms a covered end on the inner layer of case 1 close to the center of the crystallizer and the other end pass through the crystallizer, which forms the opening to the outside. The two ends of all the other 4 alloy tubes pass through the crystallizer, forming the openings to the outside on the outer layer of case 1 . To prevent heat radiation, the upper cap 4 made from flame resistant and heat insulating material is installed above the crystallizer and a prepared hole 5 is on the upper cap 4.

The said temperature-controlling panel also has a double-layer structure including the case 6 made from heat resistant metal and the lining 7 made from thermal insulating material. Plurality of heating devices 8 are installed inside the said lining 7. The said case 6 and lining 7 have plurality of through holes 9 on them. The said through holes 9 are connected correspondingly with the openings of the alloy tubes 3 on the case 1 of the crystallizer respectively.

The crystallizer is placed inside the lining 7 of the temperature-controlling panel and thermal couples are inserted in 5 alloy tubes 3 via the through holes 9 on the temperature-controlling panel. The temperature-controlling thermal couple is inserted in the shorter alloy tube and is fixed to the position close to the center of the crystallizer by the covered end of the said alloy tube. The thermal couple of the upper cap is inserted inside the crystallizer via the prepared hole 5 of the upper cap 4. The temperature output by each thermal couple is monitored, the temperature-controlling couple is linked to the program temperature-controller (not illustrated in the fig), then the heating device 8 contained in the temperature-controlling panel is adjusted, and thus the temperature of the silicon melt during the crystallization process is controlled. The thermal couples inside other 4 alloy tubes are movable in order to monitor the uniformity of the temperature during the crystallization process inside the crystallizer.

The melt of the industrial silicon is added to the crystallizer whose temperature can be controlled by program. It can be known according to the cooling curve of the industrial silicon during the cooling process illustrated in fig.2 that: point A is the temperature of the silicon melt at the time of entry into the crystallizer. With the heat radiation of the melt, the temperature declines gradually. A large number of crystal nucleuses inside the melt start to form and grow while reaching point B and silicon melt starts to be in a state of solid-liquid two-phase equilibrium. Due to the release of solid-phase latent heat, the temperature of the silicon melt remains unchanged in the state of two-phase equilibrium, constant at 1410°C. During the growth process of crystal nucleuses, segregation happens to impurities. Silicon grains grow freely in the volume space of the crystallizer and the surface of grains is solid-liquid interface of two-phase equilibrium. With the growth of grains, the area of the interface extends, proportional to the second power of the radius of grains. Impurities, however, are removed to the melting silicon that has not yet solidified and finally concentrate on the grain boundary of grains. The melting silicon on the grain boundary gather impurities (the impurities of K < 1)discharged from grains. The curve C is reached when all silicon melt solidifies. At this point, there is no more release of solid-phase latent heat. From then on, the temperature continues to decline and impurities separate out on the grain boundary one after another. The solidified silicon is taken out from the crystallizer, added to the acid tub after being crushed properly, and then soaked for 12 hours in the mixed acid solution. The acid solution infiltrates along the grain boundary. The grain boundary breaks after impurities are dissolved, and thus silicon grains after purification are set free. The silicon grains are rinsed by purified water to be neutral after being separated from the acid solution. The high-purity silicon is obtained after drying.

### Examples

(1) Adding the melting silicon to the crystallizer that has been already placed in the temperature-controlling panel, adding therein the melting Na₂CO₃ which accounts for 10% by weight of the silicon to be purified, and after stirring for 10 minutes, adding the wheat straw as covering agent to its surface, and then covering the upper cap 4;
(2) Inserting the thermal couple of the upper cap in the prepared holes 5 of the upper cap and starting the temperature recorder.
(3) Starting the heating device 8 in the temperature-controlling panel to reduce the cooling speed when the temperature is lowered to about 1500°C;
(4) Lifting the thermal couple of the upper cap and sealing the prepared holes 5 when the temperature cools down to the melting point of silicon. Keeping the heating power of the temperature-controlling panel constant. Recording the difference between the temperature indicated by the fixed temperature-controlling couple of the tube in the middle and the upper-cap couple, and from then on, the crystallization process is judged from the temperature indicated by the fixed temperature-controlling thermal couple and the temperature is printed out continuously by the temperature recorder;
(5) When the temperature curve shows the turning point meaning the start of cooling down, it indicates that the crystallization is finished and therefore heating is stopped.
(6) The solid silicon is taken out from the crystallizer when the temperature cools down to room temperature.
(7) At room temperature, silicon is crushed and soaked in the acid tub wherein the mixed acid solution containing 19% by weight of HNO₃ and 49% by weight of H₂SO₄ in a 1:1 (by weight) proportion is added. Silicon fragments are soaked and subject to standing in a fume hood for 12 hours.
(8) Silicon grains fragmented by leaching are separated from the acid solution, adding water for soaking, rinsing with water till neutral, filtering, and drying, and high-purity silicon is thus obtained.

## Claims

1. A method for the purification of silicon which comprises the steps of:
(1) adding melting Na₂CO₃ to the melting silicon to be purified while Na₂CO₃ accounts for 10% by weight of the silicon, after stirring for 10 minutes, adding covering agent to the surface of the melt blend;
(2) starting to monitor and record the temperature of the silicon to be purified;
(3)reducing the cooling speed when the temperature is lowered to 1490 ~ 1510°C ;
(4) Keeping heating power constant when the temperature reduces to the melting point of silicon;
(5) stopping heating when silicon starts to cool down;
(6) cooling silicon naturally down to room temperature and taking out the crystallized solid silicon;
(7) At room temperature, crushing the crystallized silicon and soaking them in the mixed acid solution, subject to standing in a fume hood for 12 hours; and
(8) separating the silicon grains fragmented by leaching from the acid solution, adding water for soaking, rinsing with water till neutral, filtering, and drying, and high-purity silicon is thus obtained.

2. The method for the purification of silicon as claimed in claim 1 in which the said covering agent is wheat straw or rice straw.

3. The method for the purification of silicon as claimed in claim 1 in which the said mixed acid solution is one of HCL of 19% by weight, HNO₃ of 49% by weight and H₂SO₄ of 49% by weight, or any two or more than two of them with equal weight.

4. A method for the purification of silicon using grain-boundary doping effect, **characterized in that** the melting silicon to be purified is placed in the temperature-controllable crystallizer, the number of silicon crystal nucleus and the growing speed of the grains at the time of solidification is adjusted, the segregation effect of impurities on the surface of grains and the interface of melts is used to make the impurities discharged from the grains to accumulate on the grain boundary, and then the purified silicon is obtained by setting free the grains of silicon wrapped by impurities.

5. The method for the purification of silicon using grain-boundary doping effect as claimed in claim 4 in which the said adjustment of the number of silicon crystal nucleus at the time of solidification refers to forming at the same time a large number of crystal nucleus instantly and enlarging solid-liquid interface.

6. The method for the purification of silicon using grain-boundary doping effect as claimed in claim 4 in which the said setting free the grains of silicon wrapped by impurities refers to that the high-purity grains wrapped by impurities are set free when the impurities on the grain boundary is soaked and dissolved by the acid solution.

7. The method for the purification of silicon using grain-boundary doping effect as claimed in claim 4 in which the impurities concentrating on the grain boundary separate out from the grain boundary during the cooling process and form into isolated impurity phase.

8. The method for the purification of silicon using grain-boundary doping effect as claimed in claim 4 in which the said temperature-controllable crystallizer comprises the outer temperature-controlling panel and the crystallizer placed inside. The said temperature-controlling panel controls the temperature of silicon melt during the process of crystallization by the built-in heating device. The said crystallizer contains inside the temperature-controlling thermocouple connected with program temperature controller.
